# EUROPÄISCHE PATENTSCHRIFT

(11) **EP 3 625 497 B1**
(45) Veröffentlichungstag und Bekanntmachung des Hinweises auf die Patenterteilung: **09.06.2021**
(21) Anmeldenummer: 18723474.5
(22) Anmeldetag: 08.05.2018
(51) Int. Cl.: F17C 1/06

(54) **POLKAPPENVERSTÄRKTER DRUCKBEHÄLTER**
POLAR CAP-REINFORCED PRESSURE CONTAINER
RÉSERVOIR SOUS PRESSION RENFORCÉ PAR DES CALOTTES POLAIRES

(30) Priorität: 19.05.2017 DE 102017208492
(43) Veröffentlichungstag der Anmeldung: 25.03.2020
(73) Patentinhaber: NPROXX B.V., 6422 RK Heerlen (NL)
(72) Erfinder: SONNEN, Michael, 47259 Duisburg (DE); OTREMBA, Frank, 52223 Stolberg (DE); BÄUMER, Thomas, 41836 Hückelhoven (DE); MIDDENDORF, Christian, 52072 Aachen (DE); BICKENDORF, Heinz-Willi, 50181 Bedburg (DE)
(74) Vertreter: FARAGO Patentanwälte
(86) Internationale Anmeldenummer: PCT/EP2018/061774
(87) Internationale Veröffentlichungsnummer: WO 2018/210606

(56) Entgegenhaltungen:
- DE-U1-202016 100 754
- US-A- 2 715 377
- US-A- 2 744 043

## Beschreibung

### Gebiet der Erfindung

Die Erfindung betrifft ein Verfahren zur Herstellung eines faserverstärkten Druckbehälters mit faserverstärkten Polkappen sowie einen entsprechenden Druckbehälter mit diesen Polkappen.

### Hintergrund der Erfindung

Der Markt für faserverstärkte Druckbehälter aus Faserverbundmaterial wächst kontinuierlich. Die zunehmende Förderung von Erdgas und Fracking-Gas macht speziell in Ländern ohne entsprechendes Pipelinenetz eine Speicherung in Druckbehältern erforderlich. Hinzu kommt der Automobilsektor, der stark an der Entwicklung von Brennstoffzellen-Fahrzeugen arbeitet, bei denen der Brennstoff in Form von gasförmigem Wasserstoff unter hohem Druck in Druckbehältern gespeichert werden soll. Für den Transport der Druckbehälter sind leichte Druckbehälter gewünscht, weil ein Transport von Druckbehältern mit hohen Behältergewichten unnötig viel Energie verbraucht und daher zu hohe Transportkosten verursacht.

Gegenwärtig benutzte Druckbehälter besitzen einen zylindrischen Mittelteil, auf dem sich beidseitig Polkappen zum Verschluss des Mittelteils befinden und werden beispielsweise mit einem Faser-Wickelverfahren hergestellt. Dabei wird ein Liner (Innenbehälter für den Druckbehälter) verwendet, der einerseits als Wickelkern fungiert und andererseits auch die Dichtigkeit des Behälters garantiert. Dieser Liner wird dann zur Herstellung des Druckbehälters zur Verstärkung mit Faserverbundmaterial überwickelt, damit der daraus resultierende Druckbehälter seine Stabilität erhält. Bei den Druckbehältern Type 3 wird ein metallischer Liner aus z.B. Aluminium oder Stahl eingesetzt, bei Type 4 Druckbehälter ist es ein Liner aus Kunststoff. Die Außenschicht umfasst dabei sowohl Umfangslagen als auch sogenannte Helixlagen, um eine Druckfestigkeit in radialer und axialer Richtung bereitzustellen. In den Umfangslagen besitzen die Fasern eine tangentiale Faserrichtung, um eine Druckfestigkeit in Umfangsrichtung im zylindrischen Teil des Druckbehälters bereitzustellen. Die Helixlagen stellen die axiale Druckfestigkeit des Druckbehälters im Mittelteil dar, umspannen aber auch die Polkappen zur Aufnahme des Innendrucks in diesem Bereich. DE 20 2016 100754 U1 offenbart ein Verfahren zur Herstellung eines verstärkten Druckbehälters.

Die Faserumwicklung mittels Helixlagen zur Verstärkung der Polkappen des Druckbehälters benötigt dabei mehr Fasermaterial, als zur axialen Verstärkung des zylindrischen Mittelteils erforderlich wäre. Mit einem kontinuierlichen Wickelprozess ist allerdings verbunden, daß die Helixlagen durchgängig über die Polkappen als auch über den Mittelteil abgelegt werden, wodurch viel Fasermaterial im Mittelteil verwendet werden muss.

Alternativ kann die Polkappe auch durch Auflegen von vorimprägnierten Faserabschnitten (sogenannte Prepregs) verstärkt werden, die nachträglich mit einer geringen Schichtdicke an Helixlagen über den gesamten Druckbehälter überwickelt werden. Dieser Prozess ist allerdings kosten- und zeitintensive und daher ebenfalls nachteilig.

Es wäre daher wünschenswert, wenn Druckbehälter und ein entsprechendes Herstellungsverfahren zur Verfügung stehen würden, mit dem die Polkappen eines Druckbehälters effektiv sowie kosten- und zeitgünstig mit möglichst geringen Materialeinsatz von Faserverbundmaterial verstärkt werden könnten.

### Zusammenfassung der Erfindung

Es ist daher eine Aufgabe der Erfindung, einen Druckbehälter und ein entsprechendes Verfahren zur Herstellung dieses Druckbehälters zur Verfügung zu stellen, mit dem die Polkappen des Druckbehälters effektiv sowie kosten- und zeitgünstig mit möglichst geringen Materialeinsatz von Faserverbundmaterial verstärkt werden können.

Diese Aufgabe wird gelöst durch ein Verfahren zur Herstellung eines verstärkten Druckbehälters mit einem zylindrischen Mitteilabschnitt und den Mittelabschnitt beidseitig verschließenden Polkappen umfassend eine Liner-Unterlage und ein auf die Liner-Unterlage als Druckbehälterverstärkungsschicht aufgebrachtes Faserverbundmaterial, umfassend die Schritte
- Bereitstellen eines ersten Wickelkörpers umfassend mindestens ein einer Form der Liner-Unterlage der Polkappen entsprechendes kuppelförmiges Ende und eine an das Ende angrenzende zylindrische Mittelteilauflage;
- Aufbringen des Faserverbundmaterials mittels eines Wickelprozesses zumindest auf das Ende und die Mittelteilauflage des ersten Wickelkörpers;
- Anwenden eines geeigneten Zwischenaushärtungsprozesses zur Formstabilisierung des gewickelten Faserverbundmaterials; - Durchtrennen zumindest des Faserverbundmaterials zwischen Ende und Mittelteilauflage, beispielsweise am Übergang von dem Ende zur Mittelteilauflage, mittels eines geeigneten Trennprozesses zur Herstellung einer Polkappenverstärkungsschicht;
- optionales Bearbeiten der Randbereiche der Schnittflächen zur Vergrößerung der Kontaktflächen für die spätere Überwicklung und entsprechender Formgebung der Kontaktflächen zur spannungsgerechten Lastübertragung zwischen der Polkappenverstärkung und der späteren Überwicklung bei der Fertigung des späteren Druckbehälters;
- Ablösen der Polkappenverstärkungsschicht vom ersten Wickelkörper und Aufsetzen der abgelösten Polkappenverstärkungsschicht auf die jeweilige Liner-Unterlage der Polkappe des späteren Druckbehälters;
- Aufbringen des Faserverbundmaterials mittels eines Wickelprozesses auf den mit den separat gefertigten Polkappenverstärkungsschichten belegten Liner; und
- Vernetzen der Polkappenverstärkungsschicht und des weiteren Faserverbundmaterials.

Das Faserverbundmaterial besteht im Allgemeinen aus zwei Hauptkomponenten, hier aus Fasern, eingebettet in einem Matrixmaterial, das den festen Verbund zwischen den Fasern herstellt. Das Faserverbundmaterial kann dabei aus einer Faser oder aus mehreren Fasern gewickelt werden, wobei die Faser(n) in Kontakt zueinander eng nebeneinander gewickelt werden. Dadurch entsteht eine Faserschicht, auf die die Fasern in weiteren Faserlagen gewickelt werden, bis das Faserverbundmaterial die gewünschte Dicke besitzt und eine entsprechende Verstärkungsschicht mit dieser Dicke darstellt. In einer Ausführungsform umfasst die Druckbehälterverstärkungsschicht erste und weitere Fasern, beispielsweise zweite Fasern, in mehrere Faserschichten. Durch den Verbund erhält das Faserverbundmaterial höherwertige Eigenschaften, wie beispielsweise eine hohe Festigkeit als jede der beiden einzelnen beteiligten Komponenten liefern könnte. Die Verstärkungswirkung der Fasern in Faserrichtung tritt ein, wenn das Elastizitätsmodul der Faser in Längsrichtung größer ist als das Elastizitätsmodul des Matrixmaterials, wenn die Bruchdehnung des Matrixmaterials größer ist als die Bruchdehnung der Fasern und wenn die Bruchfestigkeit der Fasern größer ist als die Bruchfestigkeit des Matrixmaterials. Als Fasern können Fasern aller Art, beispielsweise Glasfasern, Kohlenstofffasern, Keramikfasern, Stahlfasern, Naturfasern oder synthetische Fasern, verwendet werden. Als Matrixmaterialien können beispielsweise Duromere, Elastomere oder Thermoplaste verwendet werden. Die Materialeigenschaften der Fasern und Matrixmaterialien sind dem Fachmann bekannt, so dass der Fachmann eine geeignete Kombination aus Fasern und Matrixmaterialien zur Herstellung des Faserverbundmaterials für die jeweilige Anwendung auswählen kann. Hierbei können einzelne Faserlagen im Faserverbundbereich eine einzelne Faser oder mehrere gleiche oder unterschiedliche Fasern umfassen

Zylinderförmige Druckbehälter umfassen einen zylindrischen Teil, hier als Mittelabschnitt bezeichnet, der eine typischerweise kreisrunde Querschnittsfläche senkrecht zur Zylinderachse besitzt. Damit Gas unter Druck in diesem Druckbehälter gespeichert werden kann, sind die Zylinderflächen des Mittelabschnitts mit kuppelförmigen Deckelflächen, den Polkappen, verschlossen. Diese Geometriebetrachtungen gelten gleichermaßen für Druckbehälter aus einem Innenbehälter, dem sogenannten Liner, und einer über den Innenbehälter (Liner) gewickelten Außenschicht, die Druckbehälterverstärkungsschicht, zur Verstärkung des Innenbehälters (Liners), damit der daraus resultierende Druckbehälter seine Stabilität erhält. Bei den Druckbehältern Type 3 wird ein metallischer Liner aus beispielsweise. Aluminium oder Stahl eingesetzt, bei Type 4 Druckbehälter ist es ein Liner aus Kunststoff. Die Druckbehälterverstärkungsschicht wird insbesondere bei Kunststofflinern zur Bereitstellung der notwendigen Stabilität des Druckbehälters verwendet. Da der Innenbehälter als Unterlage für die Druckbehälterverstärkungsschicht dient, wird dieser im Folgenden auch als Liner-Unterlage bezeichnet. Solche Behälter besitzen einerseits ein sehr geringes Gewicht, was beispielsweise für Anwendungen in Transportmitteln wichtig ist, und andererseits können Gase wie beispielsweise Wasserstoff unter hohem Druck verlustarm gespeichert werden, da geeignete Kunststoffe eine sehr geringe Wasserstoffpermeabilität besitzen und die benötigte Festigkeit durch die Druckbehälterverstärkungsschicht aus Faserverbundmaterial bereitgestellt wird. Der erfindungsgemäße Druckbehälter umfasst somit eine Liner-Unterlage als Innenbehälter mit kuppelartigen Deckelflächen, den Polkappen, vorzugsweise mit einer von einer Halbkugel abweichenden Form, die im Randbereich angrenzend an den zylindrischen Mittelteil des Innenbehälters eine stärkere Krümmung gegenüber einer Halbkugeloberfläche aufweist, während der Zentralbereich der Polkappe eine geringere Krümmung gegenüber einer Halbkugeloberfläche aufweist. Eine solche besonders geeignete Polkappe besitzt die Form eines Isotensoid. Ein Isotensoid bezeichnet dabei eine Form, die in einer darauf gewickelten Polkappenverstärkungsschicht aus einem Faserverbundmaterial eine konstante Spannung in den Fasern in allen Punkten des Faserverlaufs bewirkt.

Um die Polkappe mit einem Faserverbundmaterial als Polkappenverstärkungsschicht zusätzlich zu verstärken, wird die Polkappenverstärkungsschicht separat vom Druckbehälter und Liner-Unterlage vorgefertigt. Der dazu verwendete erste Wickelkörper ermöglicht es, die Polkappenverstärkungsschicht mit den gewünschten mechanischen Eigenschaften mit geringem Materialeinsatz herzustellen, da hier im Wesentlichen nur die Enden des Wickelkörpers überwickelt werden und die Mittelteilauflage des ersten Wickelkörpers (und gegebenenfalls ein weiteres Ende auf der anderen Seite der Mittelteilauflage) lediglich der Zurückführung des Fasermaterials zur weiteren Überwicklung des Endes dient.

Der Begriff "erster Wickelkörper" bezeichnet hierbei den Wickelkörper, auf dem die Polkappenverstärkungsschicht hergestellt wird. Der zweite Wickelkörper bezeichnet die Liner-Unterlage im Mittelabschnitt mit aufgesetzten Polkappenverstärkungsschichten im Polkappenbereich.

Die danach auf die Liner-Unterlage des Druckbehälters aufzusetzende Polkappenverstärkungsschicht ist nur soweit vorgefertigt, dass ein formstabiles Ablösen vom ersten Wickelkörper ermöglicht wird. Die Vernetzungsfähigkeit der Polkappenverstärkungsschicht kann nach dem Zwischenhärten weiterbestehen, so dass eine stabile Vernetzung mit dem später aufgebrachten Faserverbundmaterial des Druckbehälters ermöglicht wird, um die endgültige Druckbehälterverstärkungsschicht für den gesamten Druckbehälter herzustellen. Ebenso kann die Polkappenverstärkungsschicht bei Ihrer Herstellung mit einem strukturgebenden Material bedeckt werden, das nach dem Zwischenaushärtungsprozess wieder entfernt wird, um eine gute Anbindung mit dem später aufgebrachten Faserverbundmaterial des Druckbehälters zu ermöglichen.
Der Zwischenaushärtungsprozess wird dazu mit einer für den Matrixwerkstoff geeigneten Temperatur und Prozessdauer durchgeführt. Der Zwischenaushärtungsprozess kann so geführt werden, dass das Matrixmaterial anschließend chemisch weiterhin reaktiv bleibt.
Die auf dem ersten Wickelkörper hergestellte Polkappenverstärkungsschicht wird nach dem Zwischenaushärteprozess getrennt, um sie vom ersten Wickelkörper entnehmen zu können. Hierbei kann die Wanddicke der Polkappenverstärkungsschicht zur Schnittebene hin durch mechanische Bearbeitung reduziert werden, um eine größere Kontaktfläche der Schnittflache zum später aufzubringenden Verstärkungsmaterial zu ermöglichen, oder auch die Kontur der Oberfläche des später zu bewickelnden Liners in geeigneter Weise zu beeinflussen, so dass Lastspitzen vermieden werden.
Das Durchtrennen kann dabei mit jeder für die Durchtrennung von Faserverbundmaterial geeigneten Technik, beispielweise mittels Sägen, Drehen oder Wasserstrahlschneiden, durchgeführt werden. Hierbei kann lediglich das gewickelte Faserverbundmaterial auf dem Wickelkörper durchtrennt werden, um den Wickelkörper danach wiederverwenden zu können. Alternative kann aber auch der gesamte Wickelkörper mit darauf gewickeltem Faserverbundmaterial durchtrennt werden, um danach einfach die so hergestellte Polkappenverstärkungsschicht vom Überrest des Wickelkörpers zu lösen.

Eine eventuell noch vorhandene Trennkante zwischen der Polkappenverstärkungsschicht und der später aufgebrachten Verstärkungsschicht wird durch Matrixmaterial oder Faserverbundmaterial gefüllt und durch die endgültige Vernetzung der Matrixmaterialien beider Verstärkungsschichten beseitigt, so dass eine gemeinsame Druckbehälterverstärkungsschicht entsteht. Der endgültige Vernetzungsprozess wird dabei mit für die Matrix geeigneten Parametern durchgeführt. Durch die separate Fertigung der Polkappenverstärkungsschicht kann der ideale Faserverlauf zur Verstärkung der Polkappen beim Wickelprozess der Polkappenverstärkungsschicht durchgeführt werden.

Durch die Bereitstellung der Polkappenverstärkung können die später aufgebrachten Helixlagen der Faserverbundschicht im Mittelbereich dünner ausfallen, als die dafür ansonsten auf den Druckbehälter hätten gewickelt werden müssen.

Das erfindungsgemäße Verfahren stellt somit ein Herstellungsverfahren für Druckbehälter zur Verfügung, mit dem die Polkappen des Druckbehälters effektiv, kosten- und zeitgünstig mit möglichst geringen Materialeinsatz an Faserverbundmaterial verstärkt werden können.

In einer Ausführungsform des Verfahrens wird das Aufbringen des Faserverbundmaterials auf den ersten Wickelkörper so durchgeführt, dass die Polkappenverstärkungsschicht erste Faserlagen mit einer ersten Wickelrichtung von Fasern des Fasermaterials kleiner 20 Grad beispielsweise bis hin zu den Boss tangierend und/oder zweite Faserlagen mit einer zweiten Wickelrichtung der Fasern zwischen 20 und 80 Grad, vorzugsweise 65 - 75 Grad, jeweils zur Zylinderachse der Mittelteilauflage umfasst. Hierbei entspricht die Zylinderachse des Wickelkörpers der Zylinderachse des späteren Druckbehälters. Die Faserrichtungen in den ersten Faserlagen bewirken eine gute Verstärkung der Polkappenverstärkungsschicht im Mittelbereich der Polkappen, also um die Zylinderachse herum. Die Faserrichtungen in der zweiten Faserlage bewirken eine gute Verstärkung der Polkappenverstärkungsschicht in den Randbereichen der Polkappe, die an den Mittelabschnitt des Druckbehälters angrenzen. Je nach Form und Druckbedingungen innerhalb des Druckbehälters kann die Polkappenverstärkungsschicht nur aus ersten oder zweiten Faserlagen bestehen oder einer Kombination aus ersten und zweiten Faserlagen, die beispielsweise in einer abwechselnden Schichtfolge in der Polkappenverstärkungsschicht angeordnet sein können.

In einer Ausführungsform werden dabei die ersten Faserlagen vollflächig über die Enden des ersten Wickelkörpers aufgebracht, um eine geschlossene Polkappenverstärkungsschicht bereitzustellen, die am Randbereich der Polkappe gut mit der Mittelabschnittsverstärkungsschicht vernetzt werden kann.

In einer weiteren Ausführungsform werden die zweiten Faserlagen lediglich in einem oder mehreren begrenzten Bereichen über die Enden des ersten Wickelkörpers aufgebracht. Vorzugsweise überdeckt dabei zumindest einer der begrenzten Bereiche die Mittelauflage und einen an die Mittelteilauflage angrenzenden Randbereich der Enden. Die Überdeckung der Mittelteilauflage ist für ein kontinuierliches Wickelverfahren notwendig. Nach Durchtrennen der Faserverbundschicht sind die überdeckten Bereiche somit im Randbereich der Polkappe angeordnet, wo der Faserverlauf der zweiten Faserlagen eine optimale Verstärkung bewirkt.

In einer weiteren Ausführungsform des Verfahrens umfasst der Schritt des Aufbringens des Fasermaterials die nachfolgenden Schritte:
- Aufbringen ein oder mehrerer erster Faserlagen auf den ersten Wickelkörper;
- Aufbringen ein oder mehrerer zweiter Faserlagen auf die ersten Faserlagen;
- vorzugsweise Überwickeln der vorangegangenen ersten und/oder zweiten Faserlagen mit ein oder mehreren weiteren ersten Faserlagen.
Diese Schichtfolge stellt sicher, dass sowohl der zentrale Bereich der Polkappen in deren Mitte als auch der Randbereich angrenzend an den Mittelabschnitt des Druckbehälters mit einem geringen Einsatz an Faserverbundmaterial sehr gut verstärkt werden kann.

In einer weiteren Ausführungsform des Verfahrens ist auf beiden Seiten der Mittelteilauflage jeweils eines der Enden mit einer Form entsprechend der Liner-Unterlage der Polkappen angeordnet. Die die beiden Enden miteinander verbindende zylindrische Mittelteilauflage des Wickelkörpers besitzt eine Länge entlang einer Zylinderachse der Mittelteilauflage, die kleiner als die Höhe der kuppelförmigen Enden entlang der Zylinderachse ist. Somit entsteht nach Durchtrennen des gewickelten Faserverbundmaterials als Polkappenverstärkungsschicht zur Ablösung vom Wickelkörper wenig Verschnitt an Faserverbundmaterial auf der verbleibenden Mittelteilauflage. In einer bevorzugten Ausführungsform ist die Länge LW eine Größenordnung kleiner als die Höhe HP und der Wickelprozess zum Aufbringen des Faserverbundmaterials erfolgt über beide Enden hinweg. Hierdurch kann gegebenenfalls ein Verschnitt vermieden werden, da die Länge der Mittelteilauflage gegebenenfalls gerade die Schnittbreite beim Durchtrennen und eventuellen Bearbeiten mit einem geeigneten Konturverlauf zur besseren Kraftübertragung zur weiter aufzubringenden Faserverbundschicht bei der Herstellung des Druckbehälters entspricht. In einer weiteren Ausführungsform ist daher die Länge der Mittelteilauflage so angepasst, dass der Schritt des Durchtrennens des Faserverbundmaterials zur Herstellung zweier separater Polkappenverstärkungsschichten führt, ohne dabei Verschnitt zu produzieren.

In einer weiteren Ausführungsform des Verfahrens umfasst dieses den zusätzlichen Schritt eines mechanischen Abtragens von Faserverbundmaterial über dem Mittelauflageteil und in den daran angrenzenden Bereichen über dem oder den Enden des ersten Wickelkörpers, der zwischen dem Anwenden des Zwischenhärteprozesses und dem Durchtrennen zumindest des Faserverbundmaterials ausgeführt wird, wobei die spätere Polkappenverstärkungsschicht eine Außenschicht erhält, die in den Bereichen mit Abtragung zumindest zum Teil parallel zur Zylinderachse verläuft. Durch das mechanische Abtragen wird der entsprechende Bereich der späteren Polkappenverstärkungsschicht bereits für ein Überwickeln mit Faserverbundmaterial der Mittelabschnittsverstärkungsschicht vorbereitet. Die Bereiche, die durch das Abtragen parallel zur Zylinderachse gemacht wurden, können ohne die Gefahr eines Verrutschens des übergewickelten Faserverbundmaterial überwickelt werden. Die Faserrichtung des Faserverbundmaterials der Mittelabschnittsverstärkungsschicht, das über die abgetragenen Bereiche gewickelt wird, besitzt eine im Wesentlichen tangentiale Ausrichtung, also einen Faserwinkel mit mehr als 80 Grad zur Zylinderachse des Druckbehälters. Sie stellt somit eine sehr gute Verstärkungsschicht für die Randbereiche der Polkappe dar. In diesen Fällen braucht die Polkappenverstärkungsschicht nicht selber zweite Faserlagen im Randbereich der Polkappe angrenzend an den Mittelabschnitt des Druckbehälters umfassen.

In einer alternativen Ausführungsform umfasst das Verfahren den zusätzlichen Schritt eines mechanischen Abtragens von Faserverbundmaterial über dem Mittelauflageteil und in den daran angrenzenden Bereichen über dem oder den Enden des ersten Wickelkörpers, der zwischen dem Anwenden des Zwischenhärteprozesses und dem Durchtrennen zumindest des Faserverbundmaterials ausgeführt wird, wobei die spätere Polkappenverstärkungsschicht eine Außenschicht erhält, die in den Bereichen mit Abtragung zumindest zum Teil unter einem Winkel größer 0 Grad, also beispielsweise schräg oder auch senkrecht, zur Zylinderachse verläuft.

In einer weiteren Ausführungsform umfasst das Verfahren den weiteren Schritt des Überwickelns der Polkappenverstärkungsschicht in Bereichen der Polkappenverstärkungsschicht angrenzend an den Mittelabschnitt, die ein rutschsicheres Überwickeln mit einer Faserrichtung von mehr als 80 Grad zur Zylinderachse des Mittelabschnitts zulassen.

In einer weiteren Ausführungsform umfasst das Verfahren den weiteren Schritt des Überwickelns der Polkappenverstärkungsschicht und des Mittelabschnitts mit weiterem Faserverbundmaterial. Hier können alle Faserwinkel zur Geltung kommen, niedrige, die die Polkappenverstärkungsschicht vollflächig ähnlich der ersten Faserlage belegen, höhere Faserwinkel, die ähnlich der zweiten Faserlage die Polkappenverstärkungsschicht nicht vollflächig belegen sowie Umfangslagen größer 80 Grad zur Zylinderachse des Mittelabschnitts, die im Mittelteil und dem begrenzten Bereich der Polkappenverstärkungsschicht abgelegt werden.

In einer weiteren Ausführungsform des Verfahrens weist die Liner-Unterlage am Übergang von Mittelabschnitt zur Polkappe einen Absatz auf, der einen Anschlag für die aufzusetzende Polkappenverstärkungsschicht bildet und das Aufsetzen erfolgt bis zum Anschlag an den Absatz. Die Polkappenverstärkungsschicht ist damit leicht auf die Liner-Unterlage stabil und ohne die Gefahr eines Verrutschens aufzusetzen.

Die Erfindung betrifft des Weiteren einen Druckbehälter mit einem zylindrischen Mitteilabschnitt und den Mittelabschnitt beidseitig verschließenden Polkappen umfassend eine Liner-Unterlage und ein auf die Liner-Unterlage als Druckbehälterverstärkungsschicht aufgebrachtes Faserverbundmaterial, wobei die Polkappenverstärkungsschicht hergestellt als separates Faserverbundmaterial auf die Liner-Unterlage aufgesetzt ist und die Polkappenverstärkungsschicht eine Trennkante zugewandt zum Mittelabschnitt des Druckbehälters aufweist, an der die Polkappenverstärkungsschicht zur Bildung der Druckbehälterverstärkungsschicht mit dem anderen Faserverbundmaterial des Mittelabschnitts des Druckbehälters, das im mechanischen Kontakt zur Polkappenverstärkungsschicht steht, vernetzt ist. Die Trennkante entspricht der Schneidkante, entlang der das Faserverbundmaterial auf dem Wickelkörper durchtrennt wurde. Die Trennkante steht dabei entweder senkrecht oder schräg zur Zylinderachse des Mittelabschnitts des Druckbehälters, um eine gute Vernetzung der Polkappenverstärkungsschicht mit der Mittelabschnittsverstärkungsschicht zu erreichen. Gewisse Lücken zwischen den Verstärkungsschichten könnten gegebenenfalls nachträglich mit Matrixmaterial aufgefüllt werden, um eine vollständige Vernetzung an der Trennkante zu gewährleisten.

In einer Ausführungsform umfasst die Polkappenverstärkungsschicht erste Faserlagen mit einer ersten Wickelrichtung der Fasern mit einem Winkel so klein zur Zylinderachse des Mittelabschnitts, dass die Liner-Unterlage für die Polkappen vollflächig überdeckt wird, z.B. kleiner 20 Grad und beispielsweise bis hin zu den Boss tangierend, und/oder zweite Faserlagen mit einer zweiten Wickelrichtung der Fasern zwischen 20 und 80 Grad, vorzugsweise 65 - 75 Grad, zur Zylinderachse des Mittelabschnitts, die lediglich in einem oder mehreren begrenzten Bereichen die Liner-Unterlage für die Polkappen teilweise überdeckt. Damit können sowohl der zentrale Bereich der Polkappe als auch deren Randbereich sehr gut verstärkt werden.

In einer weiteren Ausführungsform sind die zweiten Faserlagen zumindest in einem Bereich der Polkappe angrenzend an den Mittelabschnitt des Druckbehälters angeordnet. Dadurch werden die Randbereiche der Polkappe sehr gut verstärkt.

In einer weiteren Ausführungsform umfasst die Polkappenverstärkungsschicht ein oder mehreren ersten Faserlagen in Kontakt zur Liner-Unterlage der Polkappe und ein oder mehreren zweiten Faserlagen auf der oder den ersten Faserlagen. In einer bevorzugten Ausführungsform sind die vorangegangenen ersten und/oder zweiten Faserlagen mit ein oder mehreren weiteren ersten Faserlagen überwickelt. Solche Abfolgen von Faserlagen in der Polkappenverstärkungsschicht verstärken die Polkappen besonders gut.

In einer weiteren Ausführungsform weist die Liner-Unterlage am Übergang von Mittelabschnitt zur Polkappe einen Absatz auf, der einen Anschlag für die aufgesetzte Polkappenverstärkungsschicht bildet. Die Polkappenverstärkungsschicht ist damit stabil und ohne die Gefahr eines Verrutschens auf die Liner-Unterlage aufgesetzt.

In einer weiteren Ausführungsform ist die Polkappenverstärkungsschicht und der Mittelabschnitt des Druckbehälters mit weiterem Faserverbundmaterial überwickelt. Dabei können alle Faserwinkel zur Geltung kommen, niedrige, die die Polkappenverstärkungsschicht vollflächig ähnlich der ersten Faserlage belegen, höhere Faserwinkel, die ähnlich der zweiten Faserlage die Polkappenverstärkungsschicht nicht vollflächig belegen sowie Umfangslagen größer 80 Grad zur Zylinderachse des Mittelabschnitts, die im Mittelteil und dem begrenzten Bereich der Polkappenverstärkungsschicht abgelegt werden.

In einer weiteren Ausführungsform besitzt die Polkappenverstärkungsschicht in einem an den Mittelabschnitt angrenzenden Bereich eine Außenschicht, die parallel zur Zylinderachse des Mittelabschnitts verläuft. Dies ermöglicht, dass in einer Ausführungsform die Polkappenverstärkungsschicht in Bereichen der Polkappenverstärkungsschicht angrenzend an den Mittelabschnitt mit einer rutschsicheren Überwicklung mit einer Faserrichtung von mehr als 80 Grad zur Zylinderachse des Mittelabschnitts überwickelt werden kann.

### Kurze Beschreibung der Abbildungen

Diese und andere Aspekte der Erfindung werden im Detail in den Abbildungen wie folgt gezeigt.
- Fig.1:: eine Ausführungsform des erfindungsgemäßen Verfahrens für einzelne Verfahrensschritte im seitlichen Schnitt;
- Fig.2:: verschiedene Ausführungsform (a) - (c) der Polkappenverstärkungsschicht im seitlichen Schnitt erhalten mit dem erfindungsgemäßen Verfahren;
- Fig.3:: eine weitere Ausführungsform der Polkappenverstärkungsschicht gemäß dem erfindungsgemäßen Verfahren;
- Fig.4:: eine Ausführungsform des erfindungsgemäßen Druckbehälters im seitlichen Schnitt;
- Fig.5:: eine weitere Ausführungsform des erfindungsgemäßen Druckbehälters mit Überwicklung der Polkappenverstärkungsschicht in einem an den Mittelabschnitt angrenzenden Bereich im seitlichen Schnitt;
- Fig.6:: eine weitere Ausführungsform des erfindungsgemäßen Druckbehälters mit einem Absatz als Anschlag für die Polkappenverstärkungsschicht im seitlichen Schnitt;
- Fig.7:: eine Ausführungsform des erfindungsgemäßen Verfahrens zur Herstellung eines verstärkten Druckbehälters beispielsweise gemäß Fig.4.

### Detaillierte Beschreibung der Ausführungsbeispiele

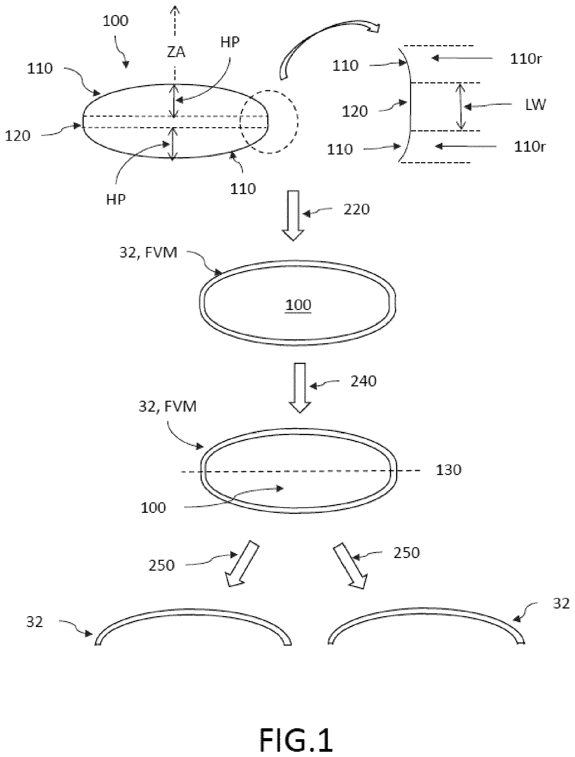

Fig.1 zeigt eine Ausführungsform des erfindungsgemäßen Verfahrens für einzelne Verfahrensschritte im seitlichen Schnitt. Der bereitgestellte erste Wickelkörper 100 umfasst hier eine zylindrische Mittelteilauflage 120, die an beiden Seiten von Enden 110 abgeschlossen ist, die die Form der Liner-Unterlage 2 der Polkappen 12 besitzen. Die die beiden Enden 110 miteinander verbindende zylindrische Mittelteilauflage 120 besitzt eine Länge LW entlang einer Zylinderachse ZA der Mittelteilauflage, die deutlich kleiner als die Höhe HP der kuppelförmigen Enden 110 entlang der Zylinderachse ZA ist. Aus Übersichtgründen ist die Länge LW allerdings hier nicht eine Größenordnung kleiner als die Höhe HP dargestellt. Der an die Mittelteilauflage 120 angrenzende Bereich der Enden 110 wird dabei als Randbereich 110r bezeichnet. Der Wickelprozess zum Aufbringen 220 des Faserverbundmaterials FVM erfolgte über die beiden Enden 110 des Wickelkörpers 100 hinweg. Die mittels eines Zwischenaushärtungsprozesses (hier nicht gezeigt) formstabilisierte Schicht (die spätere Polkappenverstärkungsschicht 32) aus gewickeltem Faserverbundmaterial FVM wird hier am Übergang zwischen den Enden 110 durch die Mittelteilauflage 120 mittels eines geeigneten Trennprozesses entlang der Trennflächen 130 zur Herstellung einer Polkappenverstärkungsschicht 32 durchtrennt 240. Danach erhält man mittels Ablösen 250 der beiden Polkappenverstärkungsschichten 31 vom ersten Wickelkörper 100 zwei separate Polkappenverstärkungsschichten 32, die zum Aufsetzen auf die Liner-Unterlage 2 somit vorbereitet sind. Durch die Form des Wickelkörpers 100 können die Fasern des Faserverbundmaterials über die Enden 110 mit optimaler Faserrichtung in einem kontinuierlichen Prozess gewickelt werden, wodurch eine hoher Stabilität und Festigkeit der Polkappenverstärkungsschichten 32 bei geringer Schichtdicke und damit geringem Verbrauch an Faserverbundmaterials FVM erreicht werden kann. Durch die geringe Länge der Mittelteilauflage 120 erhält man nach dem Durchtrennen keinen oder nur einen geringen Verschnitt an Faserverbundmaterial, was das für die Polkappen 12 zu verwendenden Material für eine gute Verstärkung mengenmäßig deutlich verringert.

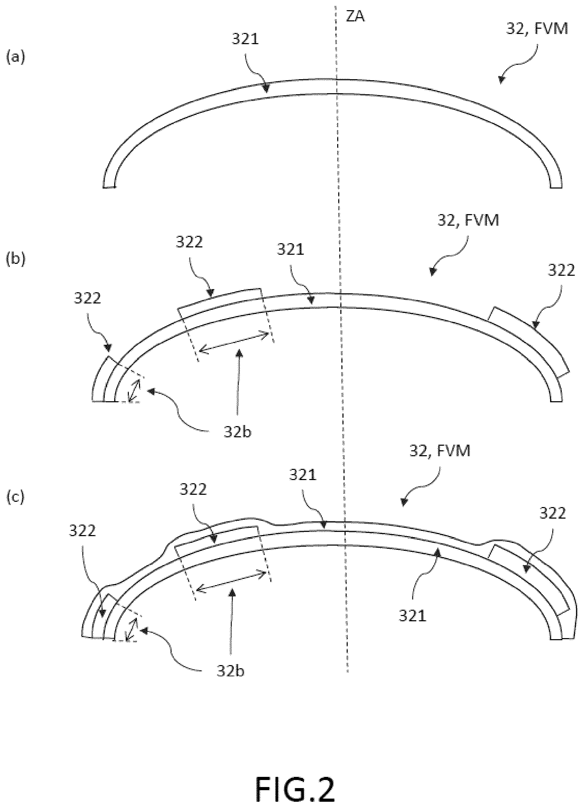

Fig.2 zeigt verschiedene Ausführungsform (a) - (c) der Polkappenverstärkungsschicht 32 im seitlichen Schnitt erhalten mit dem erfindungsgemäßen Verfahren. In Ausführungsform (a) ist die Polkappenverstärkungsschicht 32 durch erste Faserlagen 321 mit einer ersten Wickelrichtung von Fasern des Fasermaterials FVM mit einem Winkel so klein zur Zylinderachse ZA der Mittelteilauflage 120 gebildet, dass sie vollflächig über die Enden 110 des ersten Wickelkörpers 100 aufgebracht wurden. In Ausführungsform (b) sind auf die ersten Faserlagen 321 nach (a) zusätzlich zweite Faserlagen 322 mit einer zweiten Wickelrichtung der Fasern zwischen 20 und 80 Grad, vorzugsweise 65 - 75 Grad, zur Zylinderachse ZA der Mittelteilauflage 120 aufgebracht. Diese zweiten Faserlagen 322 sind hier lediglich in drei unterschiedlichen begrenzten Bereichen 32b auf die ersten Faserlagen 321 aufgebracht. Die konkreten Bereiche 32b sind hier nur beispielhaft zur Illustration so gezeigt. Hierbei ist es vorteilhaft, wenn zumindest einer der begrenzten Bereiche 32b beim Wickelprozess den Randbereich 110r der Enden 110 überdeckt. In Ausführungsform (c) sind die Faserlagen 321, 322 nach (b) zusätzlich mit weiteren ersten Faserlagen 321 überwickelt. Ein solches Paket an Faserlagen 321, 322, 321 stellt eine besonders robuste Polkappenverstärkungsschicht 32 dar.

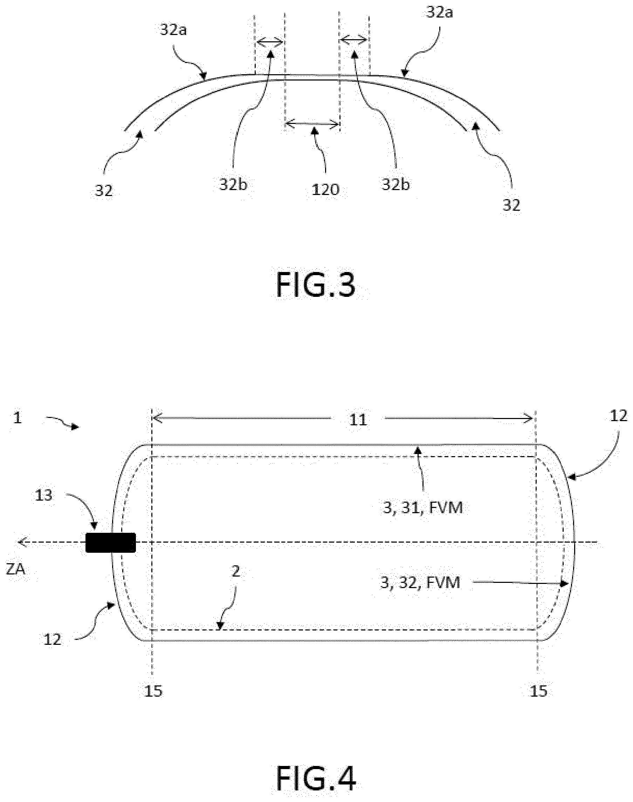

Fig.3 zeigt eine weitere Ausführungsform der Polkappenverstärkungsschicht 32 gemäß dem erfindungsgemäßen Verfahren, wobei Faserverbundmaterial FVM über dem Mittelauflageteil 120 und in den daran angrenzenden Bereichen 32b über den Enden 110 des ersten Wickelkörpers 100 mechanisch abgetragen 235 wurde. Das Abtragen kann beispielsweise durch Schleifen erfolgen. Damit das Material genau abgetragen werden kann, erfolgt dieser Schritt erst nach dem Anwenden des Zwischenhärteprozesses 230 an einem nun formstabilen Faserverbundmaterial FVM. Dadurch erhält die spätere Polkappenverstärkungsschicht 32 eine Außenschicht 32a, die in den Bereichen 32b mit Abtragung hier parallel zur Zylinderachse ZA verläuft.

Fig.4 zeigt eine Ausführungsform des erfindungsgemäßen Druckbehälters 1 im seitlichen Schnitt mit einem zylindrischen Mittelabschnitt 11 und den Mittelabschnitt 11 beidseitig verschließenden Polkappen 12 umfassend eine Liner-Unterlage 2 und ein auf die Liner-Unterlage 2 als Druckbehälterverstärkungsschicht 3 aufgebrachtes Faserverbundmaterial FVM, wobei die Polkappenverstärkungssicht 32 hergestellt als separates Faserverbundmaterial FVM auf die Liner-Unterlage 2 aufgesetzt ist und die Polkappenverstärkungsschicht 32 eine Trennkante 15 zugewandt zu Mittelabschnitt 11 des Druckbehälters 2 aufweist, an der die Polkappenverstärkungsschicht 32 zur Bildung der Druckbehälterverstärkungsschicht 3 mit dem anderen Faserverbundmaterial 31, FVM) des Mittelabschnitts 11 des Druckbehälters 1, das im mechanischen Kontakt zur Polkappenverstärkungsschicht 32 steht, vernetzt ist. Eine der Polkappen weist zusätzlich ein Ventil 13 zum Befüllen des Druckbehälters mit Füllgas und zum Ablassen des Füllgases auf. Die Polkappenverstärkungsschicht 32 kann dabei erste Faserlagen 321 mit einer ersten Wickelrichtung der Fasern so klein zur Zylinderachse ZA des Mittelabschnitts 11, dass die Liner-Unterlage 2 für die Polkappen 12 vollflächig überdeckt, und/oder zweite Faserlagen 322 mit einer zweiten Wickelrichtung der Fasern zwischen 20 und 80 Grad, vorzugsweise 65 - 75 Grad, zur Zylinderachse ZA des Mittelabschnitts 12, die lediglich in einem oder mehreren begrenzten Bereichen 32b die Liner-Unterlage 2 für die Polkappen 12 teilweise überdeckt, umfassen (hier nicht im Detail gezeigt). Die zweite Faserlagen 322 kann dabei zumindest in einem Bereich 32b der Polkappe 12 angrenzend an den Mittelabschnitt 11 des Druckbehälters 1 angeordnet sein. Die Polkappenverstärkungsschicht 32 kann dabei eine Folge von Faserlagen wie in Fig. 2 gezeigt umfassen.

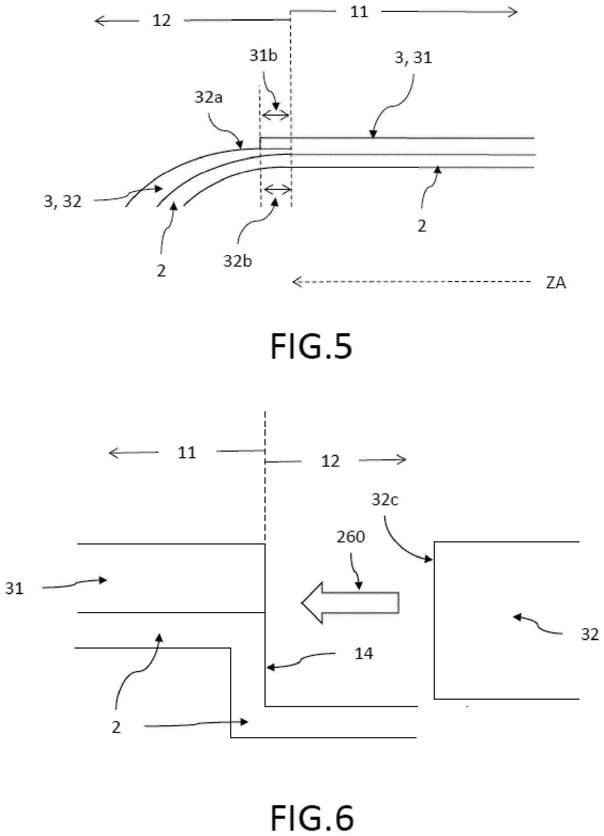

Fig.5 zeigt eine weitere Ausführungsform des erfindungsgemäßen Druckbehälters 1 mit Überwicklung der Polkappenverstärkungsschicht 32 in einem an den Mittelabschnitt 11 angrenzenden Bereich 32b im seitlichen Schnitt. Hierbei besitzt die Polkappenverstärkungsschicht 32 einem an den Mittelabschnitt 11 angrenzenden Bereich 32b eine Außenschicht 32a, die parallel zur Zylinderachse ZA des Mittelabschnitts 11 verläuft. Dieser parallele Bereich wurde wie zu Fig. 3 beschrieben hergestellt. Hier ist die Polkappenverstärkungsschicht 3 in diesem Bereichen 32b mit einer rutschsichere Überwicklung 31b mit einer Faserrichtung von mehr als 80 Grad zur Zylinderachse ZA des Mittelabschnitts 11 zulassen, überwickelt, was die Vernetzung zwischen Mittelabschnittsverstärkungsschicht 31 und Polkappenverstärkungsschicht verbessert und eine zusätzliche Verstärkung für den Randbereich der Polkappenverstärkungsschicht 31 darstellt.

Fig.6 zeigt eine weitere Ausführungsform des erfindungsgemäßen Druckbehälters 1 mit einem Absatz 14 als Anschlag für die Polkappenverstärkungsschicht 32 im seitlichen Schnitt. Hierbei besitzt die Liner-Unterlage 2 am Übergang von Mittelabschnitt 11 zur Polkappe 12 diesen Absatz. Das Aufsetzen 260 der Polkappenverstärkungsschicht 32 erfolgt dabei bis zum Anschlag an den Absatz 14. Für eine gute Vernetzung mit der Mittelabschnittsverstärkungsschicht 32 sollten der Absatz 14 und die Trennfläche 32c der Polkappenverstärkungsschicht 32 parallel zueinander verlaufen.

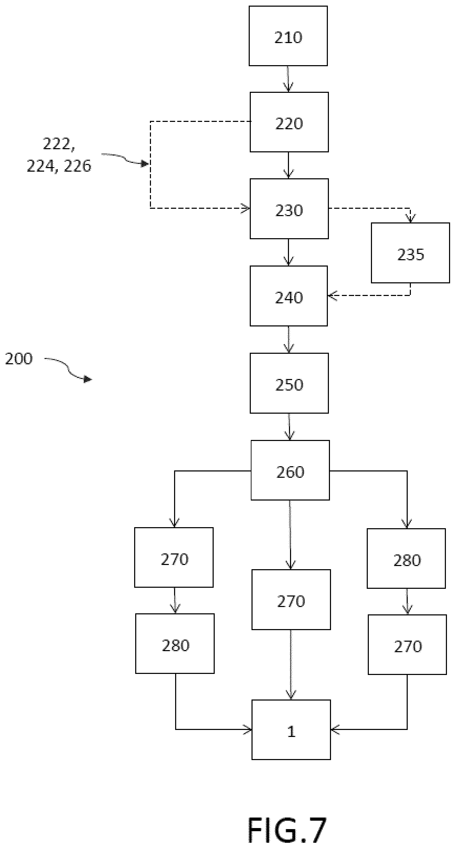

Fig.7 zeigt eine Ausführungsform eines erfindungsgemäßen Verfahrens 200 zur Herstellung eines erfindungsgemäßen verstärkten Druckbehälters 1 (siehe beispielsweise Fig.4) umfassend die Schritte des Bereitstellens 210 eines ersten Wickelkörpers 100 (siehe beispielsweise Fig.1) und des Aufbringens 220 des Faserverbundmaterials FVM mittels eines Wickelprozesses zumindest auf das Ende 110 und die Mittelteilauflage 120 des ersten Wickelkörpers 100. Der Wickelkörper 100 kann dafür auf beiden Seiten der Mittelteilauflage jeweils ein Ende 110 mit einer Form entsprechend der Liner-Unterlage 2 der Polkappen 12 umfassen, die miteinander über die zylindrische Mittelteilauflage 120 verbunden sind, die eine Länge LW entlang einer Zylinderachse ZA der Mittelteilauflage 120 besitzt, die kleiner als die Höhe HP der kuppelförmigen Enden 110 entlang der Zylinderachse ZA ist. Vorzugsweise ist die Länge LW eine Größenordnung kleiner als die Höhe HP und des Wickelprozesses zum Aufbringen 220 des Faserverbundmaterials FVM erfolgt über beide Enden 110 hinweg. Das Aufbringen 220 kann dabei die Schritte des Aufbringens 222 ein oder mehrerer erster Faserlagen 321 mit einer ersten Wickelrichtung von Fasern des Fasermaterials (FVM) kleiner 20 Grad zur Zylinderachse ZA der Mittelteilauflage 120 auf den ersten Wickelkörper 100 bis hin zu den Boss tangierend, des Aufbringens 224 ein oder mehrerer zweiter Faserlagen 322 mit einer zweiten Wickelrichtung der Fasern zwischen 20 und 80 Grad, vorzugsweise 65 - 75 Grad zur Zylinderachse ZA der Mittelteilauflage 120 auf die ersten Faserlagen 321 und des Überwickelns 225 der vorangegangenen ersten und/oder zweiten Faserlagen 321, 322 mit ein oder mehreren weiteren ersten Faserlagen 321 umfassen. Hierbei können die ersten Faserlagen vollflächig über die Enden des ersten Wickelkörpers 100 aufgebracht werden. Hierbei können die zweiten Faserlagen 322 lediglich in einem oder mehreren begrenzten Bereichen 32b über die Enden 110 des ersten Wickelkörpers 100 aufgebracht werden. Hierbei kann zumindest einer der begrenzten Bereiche 32b die Mittelauflage 120 und einen an die Mittelteilauflage 120 angrenzenden Randbereich 110r der Enden 110 überdecken. Nachdem die Faserverbundschicht gewickelt wurde, wird ein geeigneter Zwischenaushärtungsprozess 230 zur Formstabilisierung des gewickelten Faserverbundmaterials FVM angewendet, das danach aber weiterhin chemisch aktiv für eine spätere Vernetzung mit einem anderem Faserverbundmaterial 31 ist. Danach erfolgt ein Durchtrennen 240 zumindest des Faserverbundmaterials FVM am Übergang zwischen Ende 110 und Mittelteilauflage 120 mittels eines geeigneten Trennprozesses zur Herstellung einer Polkappenverstärkungsschicht 32. Hierbei kann die Länge LW der Mittelteilauflage 120 so angepasst sein, dass das Durchtrennen 240 zur Herstellung zweier separater Polkappenverstärkungsschichten 32 führt. Je nach Ausführungsform des Verfahrens kann vorher noch der zusätzliche Schritt eines mechanischen Abtragens 235 von Faserverbundmaterial FVM über dem Mittelauflageteil 120 und in den daran angrenzenden Bereichen 32b über dem oder den Enden 110 des ersten Wickelkörpers 100 erfolgen. Dadurch erhält die spätere Polkappenverstärkungsschicht 32 eine Außenschicht, die in den Bereichen 32b mit Abtragung zumindest zum Teil parallel, schräg oder senkrecht zur Zylinderachse ZA verläuft. Nach dem Durchtrennen erfolgt das Ablösen 250 der Polkappenverstärkungsschicht 31 vom ersten Wickelkörper 100 und das Aufsetzen 260 der abgelösten Polkappenverstärkungsschicht 32 auf die jeweilige Liner-Unterlage 2 der Polkappe 12 des Druckbehälters 1. Falls die Liner-Unterlage 2 am Übergang von Mittelabschnitt 11 zur Polkappe 12 einen Absatz 14 aufweist, der einen Anschlag für die aufzusetzende Polkappenverstärkungsschicht 32 bildet, kann das Aufsetzen 260 einfach bis zum Anschlag an den Absatz 14 erfolgen. Nachfolgend erfolgt das Vernetzen 270 der Polkappenverstärkungsschicht 32 und des weiteren Faserverbundmaterial FVM als Mittelabschnittsverstärkungsschicht 31. Vor oder nach dem Schritt der Vernetzung 270 kann zusätzlich ein Überwickeln 280 der Mittelabschnittsverstärkungsschicht 31 in Bereichen 32b der Polkappenverstärkungsschicht 32 angrenzend an den Mittelabschnitt 11, die ein rutschsicheres Überwickeln 280 mit einer Faserrichtung von mehr als 80 Grad zur Zylinderachse ZA des Mittelabschnitts 11 zulassen, erfolgen.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### LISTE DER BEZUGSZEICHEN

- 1: Druckbehälter
- 11: zylindrisches Mittelabschnitt des Druckbehälters
- 12: kuppelförmige Polkappen des Druckbehälters
- 13: Ventil
- 14: Absatz am Übergang von Mittelabschnitt zur Polkappe
- 15: Trennkante der Polkappenverstärkungsschicht zum Mittelabschnitt hin
- 2: Liner-Unterlage des Druckbehälters
- 3: Druckbehälterverstärkungsschicht
- 31: Mittelabschnittsverstärkungsschicht
- 31b: rutschsichere Überwicklung der Polkappenverstärkungsschicht
- 32: Polkappenverstärkungsschicht
- 32a: Außenschicht der Polkappenverstärkungsschicht
- 32b: begrenzte Bereiche der Polkappenverstärkungsschicht
- 32c: Trennfläche der Polkappenverstärkungsschicht 32
- 321: erste Faserlage
- 322: zweite Faserlage

- 100: erster Wickelkörper für Polkappenverstärkungsschicht
- 110: ein Ende / beide Enden des Wickelkörpers
- 110r: Randbereich der Enden
- 120: zylindrische Mittelteilauflage des Wickelkörpers
- 130: Trennfläche beim Durchtrennen 240

- 200: Verfahren zur Herstellung eines verstärkten Druckbehälters
- 210: Bereitstellen eines ersten Wickelkörpers
- 220: Aufbringen des Faserverbundmaterials mittels eines Wickelprozesses auf den ersten Wickelkörper
- 222: Aufbringen von ersten Faserlagen auf den ersten Wickelkörper
- 224: Aufbringen von zweiten Faserlagen auf die ersten Faserlagen
- 226: Überwickeln der ersten / zweiten Faserlagen mit weiteren ersten Faserlagen
- 230: Anwenden eines geeigneten Zwischenaushärtungsprozesses zur Formstabilisierung des gewickelten Faserverbundmaterials
- 235: mechanisches Abtragen von Faserverbundmaterial über dem Mittelteil und in den daran angrenzenden Bereichen
- 240: Durchtrennen des Faserverbundmaterials zur Herstellung einer Polkappenverstärkungsschicht
- 250: Ablösen der Polkappenverstärkungsschicht vom ersten Wickelkörper
- 260: Aufsetzen der abgelösten Polkappenverstärkungsschicht auf die jeweilige Liner-Unterlage des Druckbehälters
- 270: Vernetzen der Polkappenverstärkungsschicht und des weiteren Faserverbundmaterials (FVM)
- 280: rutschsicheres Überwickeln der Druckbehälterverstärkungsschicht im Bereich 32b mit zusätzlichem Faserverbundmaterial
- 290: Überwickeln der Druckbehälterverstärkungsschicht und des zylindrischen Mittelabschnitts des Druckbehälters mit zusätzlichem Faserverbundmaterial

- FVM: Faserverbundmaterial der Druckbehälterverstärkungsschicht
- HP: Höhe der kuppelförmigen Enden entlang der Zylinderachse
- LW: Länge des Mittelteilauflage des Wickelkörpers
- ZA: Zylinderachse des zylindrischen Mittelabschnitts des Druckbehälters und der Mittelteilauflage des Wickelkörpers

## Patentansprüche

1. Ein Verfahren (200) zur Herstellung eines verstärkten Druckbehälters (1) mit einem zylindrischen Mitteilabschnitt (11) und den Mittelabschnitt (11) beidseitig verschließenden Polkappen (12) umfassend eine Liner-Unterlage (2) und ein auf die Liner-Unterlage (2) als Druckbehälterverstärkungsschicht (3) aufgebrachtes Faserverbundmaterial (FVM), umfassend die Schritte Bereitstellen (210) eines ersten Wickelkörpers (100) umfassend mindestens ein einer Form der Liner-Unterlage (2) der Polkappen (12) entsprechendes kuppelförmiges Ende (110) und eine an das Ende (110) angrenzende zylindrische Mittelteilauflage (120); Aufbringen (220) des Faserverbundmaterials (FVM) mittels eines Wickelprozesses zumindest auf das Ende (110) und die Mittelteilauflage (120) des ersten Wickelkörpers (100); Anwenden eines geeigneten Zwischenaushärtungsprozesses (230) zur Formstabilisierung des gewickelten Faserverbundmaterials (FVM); Durchtrennen (240) zumindest des Faserverbundmaterials (FVM) zwischen Ende (110) und Mittelteilauflage (120) mittels eines geeigneten Trennprozesses zur Herstellung einer Polkappenverstärkungsschicht (32); Ablösen (250) der Polkappenverstärkungsschicht (31) vom ersten Wickelkörper (100) und Aufsetzen (260) der abgelösten Polkappenverstärkungsschicht (32) auf die jeweilige Liner-Unterlage (2) der Polkappe (12) des späteren Druckbehälters (1); Aufbringen des Faserverbundmaterials (FVM) mittels eines Wickelprozesses auf den mit den separat gefertigten Polkappenverstärkungsschichten (32) belegten Liner (2); und Vernetzen der Polkappenverstärkungsschicht (32) und des weiteren Faserverbundmaterials (FVM).

2. Das Verfahren (200) nach Anspruch 1, wobei das Aufbringen (220) des Faserverbundmaterials (FVM) auf den ersten Wickelkörper (100) so durchgeführt wird, dass die Polkappenverstärkungsschicht (32) erste Faserlagen (321) mit einer ersten Wickelrichtung von Fasern des Fasermaterials (FVM) kleiner 20 Grad und/oder zweite Faserlagen (322) mit einer zweiten Wickelrichtung der Fasern zwischen 20 und 80 Grad, vorzugsweise 65 - 75 Grad, jeweils zur Zylinderachse (ZA) der Mittelteilauflage (120) umfasst, vorzugsweise werden die ersten Faserlagen (321) vollflächig über die Enden (110) des ersten Wickelkörpers (100) aufgebracht.

3. Das Verfahren (200) nach Anspruch 2, wobei die zweiten Faserlagen (322) lediglich in einem oder mehreren begrenzten Bereichen (32b) über die Enden (110) des ersten Wickelkörpers (100) aufgebracht werden, vorzugsweise überdecket zumindest einer der begrenzten Bereiche (32b) die Mittelauflage (120) und einen an die Mittelteilauflage (120) angrenzenden Randbereich (110r) der Enden (110).

4. Das Verfahren (200) nach Anspruch 2 oder 3, wobei der Schritt des Aufbringens (220) des Fasermaterials (FVM) die Schritte umfasst Aufbringen (222) ein oder mehrerer erster Faserlagen (321) auf den ersten Wickelkörper (100); Aufbringen (224) ein oder mehrerer zweiter Faserlagen (322) auf die ersten Faserlagen (321); vorzugsweise Überwickeln (225) der vorangegangenen ersten und/oder zweiten Faserlagen (321, 322) mit ein oder mehreren weiteren ersten und/oder zweiten Faserlagen (321.

5. Das Verfahren (200) nach einem der voranstehenden Ansprüche, wobei auf beiden Seiten der Mittelteilauflage (120) jeweils eines der Enden (110) mit einer Form entsprechend der Liner-Unterlage (2) der Polkappen (12) angeordnet ist und die die beiden Enden (110) miteinander verbindende zylindrische Mittelteilauflage (120) eine Länge (LW) entlang einer 30 Zylinderachse (ZA) der Mittelteilauflage (120) besitzt, die kleiner als die Höhe **(HP)** der kuppelförmigen Enden (110) entlang der Zylinderachse (ZA) ist, vorzugsweise ist die Länge (LW) eine Größenordnung kleiner als die Höhe **(HP)** und der Wickelprozesses zum Aufbringen (220) des Faserverbundmaterials (FVM) über beide Enden (110) hinweg erfolgt, vorzugsweise ist die Länge (LW) der Mittelteilauflage (120) so angepasst, dass der Schritt des Durchtrennens (240) des Faserverbundmaterials (FVM) zur Herstellung zweier separater Polkappenverstärkungsschichten (32) führt.

6. Das Verfahren (200) nach einem der voranstehenden Ansprüche, umfassend den zusätzlichen Schritt eines mechanischen Abtragens (235) von Faserverbundmaterial (FVM) über dem Mittelauflageteil (120) und in den daran angrenzenden Bereichen (32b) über dem oder den Enden (110) des ersten Wickelkörpers (100), der zwischen dem Anwenden des Zwischenhärteprozesses (230) und dem Durchtrennen (240) zumindest des Faserverbundmaterials (FVM) ausgeführt wird, wobei die spätere Polkappenverstärkungsschicht (32) eine Außenschicht (32a) erhält, die in den Bereichen (32b) mit Abtragung zumindest zum Teil parallel zur Zylinderachse (ZA) verläuft, vorzugsweise weist die Liner-Unterlage (2) am Übergang von Mittelabschnitt (11) zur Polkappe (12) einen Absatz (14) auf, der einen Anschlag für die aufzusetzende Polkappenverstärkungsschicht (32) bildet und das Aufsetzen (260) erfolgt bis zum Anschlag an den Absatz (14) oder umfassend den zusätzlichen Schritt eines mechanischen Abtragens (235) von Faserverbundmaterial (FVM) über dem Mittelauflageteil (120) und in den daran angrenzenden Bereichen (32b) über dem oder den Enden (110) des ersten Wickelkörpers (100), der zwischen dem Anwenden des Zwischenhärteprozesses (230) und dem Durchtrennen (240) zumindest des Faserverbundmaterials (FVM) ausgeführt wird, wobei die spätere Polkappenverstärkungsschicht (32) eine Außenschicht (32a) erhält, die in den Bereichen (32b) mit Abtragung zumindest zum Teil unter einem Winkel größer O Grad zur Zylinderachse (ZA) verläuft.

7. Das Verfahren (200) nach Anspruch 6, umfassend den weiteren Schritt des Überwickelns (280) der Polkappenverstärkungsschicht (32) in Bereichen (32b) der Polkappenverstärkungsschicht (32) angrenzend an den Mittelabschnitt (11), die ein rutschsicheres Überwickeln (280) mit einer Faserrichtung von mehr als 80 Grad zur Zylinderachse (ZA) des Mittelabschnitts (11) zulassen.

8. Das Verfahren (200) nach Anspruch 6 oder 7, umfassend den weiteren Schritt des Überwickelns (290) der Polkappenverstärkungsschicht (32) und des Mittelabschnitts (11) mit weiterem Faserverbundmaterial (FVM).

9. Das Verfahren (200) nach einem der vorhergehenden Ansprüche, wobei nach dem Durchtrennen (240) zumindest des Faserverbundmaterials (FVM) zwischen Ende (110) und Mittelteilauflage (120) und vor dem Ablösen (250) der Polkappenverstärkungsschicht (31) vom ersten Wickelkörper (100) die Randbereiche der Schnittflächen zur Vergrößerung der Kontaktflächen für die spätere Überwicklung und entsprechender Formgebung der Kontaktflächen zur spannungsgerechten Lastübertragung zwischen der Polkappenverstärkung und der späteren Überwicklung bei der Fertigung des späteren Druckbehälters bearbeitet werden.

10. Ein Druckbehälter (1) mit einem zylindrischen Mitteilabschnitt (11) und den Mittelabschnitt (11) beidseitig verschließenden Polkappen (12) umfassend eine Liner-Unterlage (2) und ein auf die Liner-Unterlage (2) als Druckbehälterverstärkungsschicht (3) aufgebrachtes Faserverbundmaterial (FVM), wobei die Polkappenverstärkungsschicht (32) hergestellt als separates Faserverbundmaterial (FVM) auf die Liner-Unterlage (2) aufgesetzt ist und die Polkappenverstärkungsschicht (32) eine Trennkante (15) zugewandt zu Mittelabschnitt (11) des Druckbehälters (2) aufweist, an der die Polkappenverstärkungsschicht (32) zur Bildung der Druckbehälterverstärkungsschicht (3) mit dem anderen Faserverbundmaterial (31, FVM) des Mittelabschnitts (11) des Druckbehälters (1), das im mechanischen Kontakt zur Polkappenverstärkungsschicht (32) steht, vernetzt ist, wobei das separat hergestellte Faserverbundmaterial (FVM) das von einem Faserverbundmaterial (FVM), aufweisend ein kuppelförmige Ende und eine an das kuppelförmige Ende angrenzende zylindrische Mittelteilauflage, entlang einer Schneidkante abgetrennte kuppelförmiges Ende ist, wobei die Trennkante (15) der Schneidkante entspricht.

11. Der Druckbehälter (1) nach Anspruch 10, **dadurch gekennzeichnet, dass** die Polkappenverstärkungsschicht (32) erste Faserlagen (321) mit einer ersten Wickelrichtung der Fasern kleiner 20 Grad zur Zylinderachse (ZA) des Mittelabschnitts (11), die die Liner-Unterlage (2) für die Polkappen (12) vollflächig überdeckt, und/oder zweite Faserlagen (322) mit einer zweiten Wickelrichtung der Fasern zwischen 20 und 80 Grad zur Zylinderachse (ZA) des Mittelabschnitts (12), die lediglich in einem oder mehreren begrenzten Bereichen (32b) die Liner-Unterlage (2) für die Polkappen (12) teilweise überdeckt, umfasst, vorzugsweise ist die zweite Faserlage (322) zumindest in einem Bereich (32b) der Polkappe (12) angrenzend an den Mittelabschnitt (11) des Druckbehälters (1) angeordnet.

12. Der Druckbehälter (1) nach Anspruch 10 oder 11, **dadurch gekennzeichnet, dass** die Polkappenverstärkungsschicht (32) ein oder mehreren ersten Faserlagen (321) in Kontakt zur Liner-Unterlage (2) der Polkappe (12), ein oder mehreren zweite Faserlagen (322) auf der oder den ersten Faserlagen (321) umfasst, vorzugsweise sind die vorangegangenen ersten und/oder zweiten Faserlagen (321, 322) mit ein oder mehreren weiteren ersten Faserlagen (321) überwickelt.

13. Der Druckbehälter (1) nach einem der Ansprüche 10 bis 12, **dadurch gekennzeichnet, dass** die Liner-Unterlage (2) am Übergang von Mittelabschnitt (11) zur Polkappe (12) einen Absatz (14) aufweist, der einen Anschlag für die aufgesetzte Polkappenverstärkungsschicht (32) bildet.

14. Der Druckbehälter (1) nach einem der Ansprüche 10 bis 13, **dadurch gekennzeichnet, dass** die Polkappenverstärkungsschicht (3) und der Mittelabschnitt (11) mit weiterem Faserverbundmaterial (FVM) überwickelt ist.

15. Der Druckbehälter (1) nach einem der Ansprüche 10 bis 14, **dadurch gekennzeichnet, dass** die Polkappenverstärkungsschicht (32) in einem an den Mittelabschnitt (11) angrenzenden Bereich eine Außenschicht (32a) besitzt, die parallel zur Zylinderachse (ZA) des Mittelabschnitts (11) verläuft, und/oder. dass die Polkappenverstärkungsschicht (3) in Bereichen (32b) der Polkappenverstärkungsschicht (32) angrenzend an den Mittelabschnitt (11), mit einer rutschsichere Überwicklung (31b) mit einer Faserrichtung (FVM) von mehr als 80 Grad zur Zylinderachse (ZA) des Mittelabschnitts (11) zulassen, überwickelt ist.

## Claims

1. A method (200) for manufacturing a reinforced pressure vessel (1) having a cylindrical central portion (11) and polar caps (12) closing said central portion (11) on both sides, comprising a liner underlay (2) and a fibre composite material (FVM) applied onto the liner underlay (2) as a pressure vessel reinforcing layer (3), the method comprising the steps of providing (210) a first winding body (100) comprising at least one dome-shaped end (110) corresponding to a shape of the liner underlay (2) of the polar caps (12) and a cylindrical central part support (120) adjacent to the end (110); applying (220) the fibre composite material (FVM) at least onto the end (110) and the central part support (120) of the first winding body (100), using a winding process; using a suitable intermediate curing process (230) for dimensionally stabilising the wound fibre composite material (FVM); severing (240) at least the fibre composite material (FVM) between the end (110) and the central part support (120) using a suitable severing process for producing a polar cap reinforcing layer (32); detaching (250) the polar cap reinforcing layer (32) from the first winding body (100) and placing (260) the detached polar cap reinforcing layer (32) onto the respective liner underlay (2) of the polar cap (12) of the later pressure vessel (1); applying the fibre composite material (FVM) onto the liner (2) that is superimposed with the separately produced polar cap reinforcing layers (32) using a winding process; and cross-linking the polar cap reinforcing layer (32) and the further fibre composite material (FVM).

2. The method (200) in accordance with Claim 1, wherein the step of applying (220) the fibre composite material (FVM) onto the first winding body (100) is carried out such that the polar cap reinforcing layer (32) comprises first fibre layers (321) with a first winding direction of fibres of the fibre material (FVM) of less than 20 degrees, and/or second fibre layers (322) with a second winding direction of the fibres of between 20 and 80 degrees, preferably 65 to 75 degrees, in each case relative to the cylinder axis (ZA) of the central part support (120), preferably wherein the first fibre layers (321) are applied all-over the ends (110) of the first winding body (100).

3. The method (200) in accordance with Claim 2, wherein the second fibre layers (322) are applied over the ends (110) of the first winding body (100) in one or more limited regions (32b) only, preferably wherein at least one of the limited regions (32b) covers the central support (120) and an edge region (110r) of the ends (110) adjacent to the central support (120).

4. The method (200) in accordance with Claim 2 or 3, wherein the step of applying (220) the fibre material (FVM) comprises the steps of applying (222) one or more first fibre layers (321) onto the first winding body (100); applying (224) one or more second fibre layers (322) onto the first fibre layers (321); preferably overwrapping (225) the preceding first and/or second fibre layers (321, 322) with one or more further first and/or second fibre layers (321).

5. The method (200) in accordance with any one of the preceding claims, wherein one of the ends (110) having a shape corresponding to the liner underlay (2) of the polar caps (12) is arranged on each of the two sides of the central part support (120) and the cylindrical central part support (120) connecting the two ends (110) to each other has a length (LW) along a cylinder axis (ZA) of the central part support (120) that is less than the height **(HP)** of the dome-shaped ends (110) along the cylinder axis (ZA), preferably wherein the length (LW) is one magnitude less than the height **(HP)** and the winding process for applying (220) the fibre composite material (FVM) is carried out over and beyond both ends (110), preferably wherein the length (LW) of the central part support (120) is adjusted such that the step of severing (240) the fibre composite material (FVM) results in the production of two separate polar cap reinforcing layers (32).

6. The method (200) in accordance with any one of the preceding claims, comprising the additional step of mechanically removing (235) fibre composite material (FVM) above the central support (120) and in the regions (32b) adjacent thereto over the end(s) (110) of the first winding body (100), said additional step being carried out between the step of using the intermediate curing process (230) and the step of severing (240) at least the fibre composite material (FVM), wherein the later polar cap reinforcing layer (32) is provided with an outer layer (32a) which in the regions (32b) subjected to the removal runs at least partially parallel relative to the cylinder axis (ZA), preferably wherein the liner underlay (2) has a shoulder (14) at the transition from the central portion (11) to the polar cap (12), said shoulder (14) forming a stop for the polar cap reinforcing layer (32) to be placed, and wherein the step of placing (260) is carried out to the stop at the shoulder (14), or comprising the additional step of mechanically removing (235) fibre composite material (FVM) above the central support (120) and in the regions (32b) adjacent thereto over the end(s) (110) of the first winding body (100), said additional step being carried out between the step of using the intermediate curing process (230) and the step of severing (240) at least the fibre composite material (FVM), wherein the later polar cap reinforcing layer (32) is provided with an outer layer (32a) which in the regions (32b) subjected to the removal runs at least partially at an angle greater than 0 degrees relative to the cylinder axis (ZA).

7. The method (200) in accordance with Claim 6, comprising the further step of overwrapping (280) the polar cap reinforcing layer (32) in regions (32b) of the polar cap reinforcing layer (32) adjacent to the central portion (11), which permit non-skid overwrapping (280) with a fibre direction of more than 80 degrees relative to the cylinder axis (ZA) of the central portion (11).

8. The method (200) in accordance with Claim 6 or 7, comprising the further step of overwrapping (290) the polar cap reinforcing layer (32) and the central portion (11) with further fibre composite material (FVM).

9. The method (200) in accordance with any one of the preceding claims, wherein subsequent to the step of severing (240) at least the fibre composite material (FVM) between the end (110) and the central part support (120) and prior to the step of detaching (250) the polar cap reinforcing layer (32) from the first winding body (100) the edge regions of the cutting areas are machined for enlarging the contact surfaces for the later overwrapping and the corresponding shaping of the contact surfaces for stress-compliant load transfer between the polar cap reinforcement and the later overwrapping during production of the later pressure vessel.

10. A pressure vessel (1) having a cylindrical central portion (11) and polar caps (12) closing the central portion (11) on both sides, comprising a liner underlay (2) and a fibre composite material (FVM) applied onto the liner underlay (2) as a pressure vessel reinforcing layer (3), wherein the polar cap reinforcing layer (32) that is produced as a separate fibre composite material (FVM) is placed onto the liner underlay (2) and the polar cap reinforcing layer (32) has a severing edge (15) facing the central portion (11) of the pressure vessel (1), at which severing edge (15) the polar cap reinforcing layer (32) is cross-linked with the other fibre composite material (31, FVM) of the central portion (11) of the pressure vessel (1) in mechanical contact with the polar cap reinforcing layer (32) to form the pressure vessel reinforcing layer (3), wherein the separately produced fibre composite material (FVM) is the dome-shaped end that is, along a cutting edge, severed from a fibre composite material (FVM) which has a dome-shaped and a cylindrical central part support adjacent to the dome-shaped end, wherein the severing edge (15) corresponds to the cutting edge.

11. The pressure vessel (1) in accordance with Claim 10, **characterised in that** the polar cap reinforcing layer (32) comprises first fibre layers (321) with a first winding direction of the fibres relative to the cylinder axis (ZA) of the central portion (11) of less than 20 degrees, which covers the liner underlay (2) for the polar caps (12) all-over, and/or second fibre layers (322) with a second winding direction of the fibres between 20 and 80 degrees relative to the cylinder axis (ZA) of the central portion (12), which partially covers the liner underlay (2) for the polar caps (12) in one or more limited regions (32b) only, preferably wherein the second fibre layer (322) is arranged at least in a region (32b) of the polar cap (12) adjacent to the central portion (11) of the pressure vessel (1).

12. The pressure vessel (1) in accordance with Claim 10 or 11, **characterised in that** the polar cap reinforcing layer (32) comprises one or more first fibre layers (321) in contact with the liner underlay (2) of the polar cap (12), one or more second fibre layers (322) on the first fibre layer(s) (321), preferably wherein the preceding first and/or second fibre layers (321, 322) are overwrapped with one or more further first fibre layers (321).

13. The pressure vessel (1) in accordance with any one of Claims 10 to 12, **characterised in that** the liner underlay (2) has a shoulder (14) at the transition from the central portion (11) to the polar cap (12), said shoulder (14) forming a stop for the placed polar cap reinforcing layer (32).

14. The pressure vessel (1) in accordance with any one of Claims 10 to 13, **characterised in that** the polar cap reinforcing layer (32) and the central portion (11) are overwrapped with further fibre composite material (FVM).

15. The pressure vessel (1) in accordance with any one of Claims 10 to 14, **characterised in that** the polar cap reinforcing layer (32) has an outer layer (32a) in a region adjacent to the central portion (11), said outer layer (32a) running parallel to the cylinder axis (ZA) of the central portion (11), and/or that the polar cap reinforcing layer (32) is overwrapped in regions (32b) of the polar cap reinforcing layer (32) adjacent to the central portion (11) with a non-skid overwrapping (31b) with a fibre direction (FVM) of more than 80 degrees relative to the cylinder axis (ZA) of the central portion (11).

## Revendications

1. Procédé (200) de fabrication d'un réservoir sous pression renforcé (1) doté d'une section centrale cylindrique (11) et de calottes polaires (12) fermant la section centrale (11) des deux côtés, comprenant une base de liner (2) et un matériau composite fibreux (FVM) appliqué sur la base de liner (2) sous forme d'une couche de renforcement de réservoir sous pression (3), comprenant les étapes de mise à disposition (210) d'un premier corps d'enroulement (100) comprenant au moins une extrémité en forme de coupole (110) correspondant à une forme de la base de liner (2) des calottes polaires (12) et un support d'élément central (120) cylindrique jouxtant l'extrémité (110); d'application (220) du matériau composite fibreux (FVM) au moyen d'un processus d'enroulement au moins sur l'extrémité (110) et le support d'élément central (120) du premier corps d'enroulement (100); d'application d'un processus de durcissement intermédiaire approprié (230) pour la stabilisation de forme du matériau composite fibreux (FVM) enroulé; de sectionnement (240) au moins du matériau composite fibreux (FVM) entre l'extrémité (110) et le support d'élément central (120) au moyen d'un processus approprié de séparation pour fabriquer la couche de renforcement de calotte polaire (32); de détachement (250) de la couche de renforcement de calotte polaire (31) du premier corps d'enroulement (100) et de pose (260) de la couche de renforcement de calotte polaire détachée (32) sur la base de liner respective (2) de la calotte polaire (12) du futur réservoir sous pression (1); d'application du matériau composite fibreux (FVM) au moyen d'un processus d'enroulement sur le liner (2) revêtu des couches de renforcement de calotte polaire fabriquées séparément (32); et de réticulation de la couche de renforcement de calotte polaire (32) et de l'autre matériau composite fibreux (FVM).

2. Procédé (200) selon la revendication 1, dans lequel l'application (220) du matériau composite fibreux (FVM) sur le premier corps d'enroulement (100) est réalisée de manière à ce que la couche de renforcement de calotte polaire (32) comprenne des premières couches fibreuses (321) ayant un premier sens d'enroulement des fibres du matériau composite fibreux (FVM) inférieur à 20 degrés et/ou des secondes couches fibreuses (322) ayant un second sens d'enroulement des fibres de 20 à 80 degrés, de préférence 65 à 75 degrés, respectivement par rapport à l'axe de cylindre (ZA) de le support d'élément central (120), les premières couches fibreuses (321) étant de préférence appliquées sur toute leur surface sur les extrémités (110) du premier corps d'enroulement (100).

3. Procédé (200) selon la revendication 2, dans lequel les secondes couches fibreuses (322) sont appliquées simplement dans une ou plusieurs zones limitées (32b) sur les extrémités (110) du premier corps d'enroulement (100), au moins une des zones limitées (32b) recouvrant de préférence le support d'élément d'appui central (120) et une zone périphérique (110r) jouxtant le support d'élément central (120) des extrémités (110).

4. Procédé (200) selon la revendication 2 ou 3, dans lequel l'étape d'application (220) du matériau fibreux (FVM) comprend les étapes; d'application (222) d'une ou plusieurs premières couches fibreuses (321) sur le premier corps d'enroulement (100); d'application (224) d'une ou plusieurs secondes couches fibreuses (322) sur les premières couches fibreuses (321); de préférence d'enveloppement (225) des premières et/ou secondes couches fibreuses précédentes (321, 322) avec une ou plusieurs autres premières et/ou secondes couches fibreuses (321).

5. Procédé (200) selon une des revendications précédentes, dans lequel, sur les deux faces du support d'élément central (120), respectivement une des extrémités (110) ayant une forme correspondant à la base de liner (2) des calottes polaires (12) est disposée et le support d'élément central cylindrique (120) reliant les deux extrémités (110) entre elles possède une longueur (LW) le long d'un axe de cylindre de 30 (ZA) du support d'élément central (120) qui est inférieure à la hauteur (HP) des extrémités en forme de coupoles (110) le long de l'axe de cylindre (ZA), la longueur (LW) étant de préférence dans un ordre de grandeur inférieur à la hauteur (HP) et le processus d'enroulement pour l'application (220) du matériau composite fibreux (FVM) ayant lieu au-delà des deux extrémités (110), la longueur (LW) du support d'élément central (120) étant de préférence adaptée de manière à ce que l'étape de sectionnement (240) du matériau composite fibreux (FVM) entraîne la fabrication de deux couches séparées de renforcement de calotte polaire (32).

6. Procédé (200) selon une des revendications précédentes, comprenant l'étape supplémentaire d'enlèvement mécanique (235) de matériau composite fibreux (FVM) sur l'élément d'appui central (120) et dans les zones le jouxtant (32b) au-dessus de la ou des extrémités (110) du premier corps d'enroulement (100) qui est exécutée entre l'application du processus de durcissement intermédiaire (230) et le sectionnement (240) au moins du matériau composite fibreux (FVM), la future couche de renforcement de calotte polaire (32) recevant une couche extérieure (32a) qui, dans les zones (32b) à enlèvement, s'étend du moins en partie parallèlement à l'axe de cylindre (ZA), la base de liner (2) présentant de préférence, à la transition entre la section centrale (11) et la calotte polaire (12), un talon (14) qui constitue une butée pour la couche de renforcement de calotte polaire à poser (32) et la pose (260) ayant lieu jusqu'à la butée au niveau du talon (14), ou comprenant l'étape supplémentaire d'enlèvement mécanique (235) de matériau composite fibreux (FVM) sur le support d'élément d'appui central (120) et dans les zones (32b) le jouxtant sur la ou les extrémités (110) du premier corps d'enroulement (100) qui est exécutée entre l'application du processus de durcissement intermédiaire (230) et le sectionnement (240) au moins du matériau composite fibreux (FVM), la future couche de renforcement de calotte polaire (32) recevant une couche extérieure (32a) qui s'étend dans les zones (32b) à enlèvement au moins en partie suivant un angle supérieur à 0 degré par rapport à l'axe de cylindre (ZA).

7. Procédé (200) selon la revendication 6, comprenant l'autre étape d'enveloppement (280) de la couche de renforcement de calotte polaire (32) dans des zones (32b) de la couche de renforcement de calotte polaire (32) jouxtant la section centrale (11) et qui permettent un enveloppement antidérapant (280) avec un sens des fibres de plus de 80 degrés par rapport à l'axe de cylindre (ZA) de la section centrale (11).

8. Procédé (200) selon la revendication 6 ou 7, comprenant l'autre étape d'enveloppement (290) de la couche de renforcement de calotte polaire (32) et de la section centrale (11) avec plus de matériau composite fibreux (FVM).

9. Procédé (200) selon une des revendications précédentes, dans lequel, après le sectionnement (240) au moins du matériau composite fibreux (FVM) entre l'extrémité (110) et le support d'élément central (120) et avant le détachement (250) de la couche de renforcement de calotte polaire (32) du premier corps d'enroulement (100), les zones périphériques des surfaces de coupe sont usinées pour agrandir les surfaces de contact pour le futur enveloppement et pour façonner en conséquence les surfaces de contact pour un transfert de charges conforme à la tension entre le renforcement de calotte polaire et le futur enveloppement lors de la fabrication du futur réservoir sous pression.

10. Réservoir sous pression (1) comportant une section d'élément central cylindrique (11) et des calottes polaires (12) fermant la section centrale (11) des deux côtés, comprenant une base de liner (2) et un matériau composite fibreux (FVM) appliqué sur la base de liner (2) sous forme d'une couche de renforcement de réservoir sous pression (3), la couche de renforcement de calotte polaire (32) étant fabriquée sous forme d'un matériau composite fibreux (FVM) séparé sur la base de liner (2) et la couche de renforcement de calotte polaire (32) présentant une arête de séparation (15) tournée vers la section centrale (11) du réservoir sous pression (2) et au niveau de laquelle la couche de renforcement de calotte polaire (32) est réticulée pour former la couche de renforcement de réservoir sous pression (3) avec l'autre matériau composite fibreux (31, FVM) de la section centrale (11) du réservoir sous pression (1) qui est en contact mécanique avec la couche de renforcement de calotte polaire (32), le matériau composite fibreux (FVM) fabriqué séparément étant l'extrémité en forme de coupole séparée le long d'une arête de coupe par un matériau composite fibreux (FVM) présentant une extrémité en forme de coupole et un support d'élément central cylindrique jouxtant l'extrémité en forme de coupole, l'arête de séparation (15) correspondant à l'arête de coupe.

11. Réservoir sous pression (1) selon la revendication 10, **caractérisé en ce que** la couche de renforcement de calotte polaire (32) comprend des premières couches fibreuses (321) ayant un premier sens d'enroulement des fibres inférieur à 20 degrés par rapport à l'axe de cylindre (ZA) de la section centrale (11) qui recouvre la couche de liner (2) pour les calottes polaires (12) sur toute sa surface, et/ou des secondes couches fibreuses (322) ayant un second sens d'enroulement des fibres entre 20 et 80 degrés par rapport à l'axe de cylindre (ZA) de la section centrale (12) qui recouvre simplement partiellement la base de liner (2) pour les calottes polaires (12) dans une ou plusieurs zones limitées (32b), la seconde couche fibreuse (322) étant de préférence disposée au moins dans une zone (32b) de la calotte polaire (12) jouxtant la section centrale (11) du réservoir sous pression (1).

12. Réservoir sous pression (1) selon la revendication 10 ou 11, **caractérisé en ce que** la couche de renforcement de calotte polaire (32) comprend une ou plusieurs premières couches fibreuses (321) en contact avec la base de liner (2) de la calotte polaire (12), une ou plusieurs seconde couches fibreuses (322) sur la ou les premières couches fibreuses (321), les premières et/ou secondes couches fibreuses précédentes (321, 322) étant de préférence enveloppées par une ou plusieurs autres couches fibreuses (321).

13. Réservoir sous pression (1) selon une des revendications 10 à 12, **caractérisé en ce que** la base de liner (2) présente, à la transition entre la section centrale (11) et la calotte polaire (12), un talon (14) qui constitue une butée pour la couche de renforcement de calotte polaire posée (32).

14. Réservoir sous pression (1) selon une des revendications 10 à 13, **caractérisé en ce que** la couche de renforcement de calotte polaire (32) et la section centrale (11) sont enveloppées avec plus de matériau composite fibreux (FVM).

15. Réservoir sous pression (1) selon une des revendications 10 à 14, **caractérisé en ce que** la couche de renforcement de calotte polaire (32) possède, dans une zone jouxtant la section centrale (11), une couche extérieure (32a) qui s'étend parallèlement à l'axe de cylindre (ZA) de la section centrale (11), et/ou que la couche de renforcement de calotte polaire (32), dans des zones (32b) de la couche de renforcement de calotte polaire (32) jouxtant la section centrale (11) est enveloppée avec un enveloppement antidérapant (31b) permettant un sens de fibres (FVM) de plus de 80 degrés par rapport à l'axe de cylindre (ZA) de la section centrale (11).
